# EUROPEAN PATENT APPLICATION

(11) **EP 3 147 877 A1**
(43) Date of publication of application: **29.03.2017**
(21) Application number: 16179735.2
(22) Date of filing: 15.07.2016
(51) Int. Cl.: G07G 1/00, G06Q 20/40

(54) **CHECK-OUT APPARATUS**

(30) Priority: 17.09.2015 US 201514857190
(71) Applicant: Toshiba TEC Kabushiki Kaisha, Tokyo 141-0032 (JP)
(72) Inventor: KAZUKI, Taira, Shinagawa-ku, Tokyo 141-8562 (JP); ARIGA, Norimasa, Shinagawa-ku, Tokyo 141-8562 (JP)
(74) Representative: Takeuchi, Maya

(57) **Abstract**

According to one embodiment, a checkout apparatus comprises a screen, an imaging unit, a product identification unit, and a settlement processing unit. The screen transmits light. The imaging unit captures an image of products through the screen. The product identification unit identifies all the products serving as settlement targets from the image captured by the imaging unit, and acquires information to settle for the identified products. The settlement processing unit performs settlement processing for the products identified by the product identification unit.

## Description

### FIELD

Embodiments described herein relate generally to a checkout apparatus.

### BACKGROUND

In related art, checkout apparatuses include a system that identifies a product serving as a settlement target by various methods. For example, there is a system in which a three-dimensional scanner applies X-rays (or ultrasonic waves, or electromagnetic waves) to a bar code formed on a product with special ink to read the bar code. The system requires security management for X-rays (or ultrasonic waves, or electromagnetic waves), and causes increase in size of the apparatus and increase in cost for printing bar codes on products with special ink. There is also a system that reads product information from RFID tags attached to products. The system requires cost for attaching RFID tags to products. There is also a system that reads bar codes on products with an optical scanner. The system has difficulty in reading images of bar codes all together from a plurality of products arranged at random.

### BRIEF DESCRIPTION OF THE DRAWINGS

FIG. 1 is a diagram illustrating a configuration of basic functions of a self-checkout terminal (checkout apparatus) 1 according to embodiments.
FIG. 2 is a diagram illustrating a configuration example of an external appearance of the self-checkout terminal according to embodiments.
FIG. 3 is a block diagram illustrating a configuration example of a control system of a self-checkout terminal according to a first embodiment.
FIG. 4 is a diagram illustrating a configuration example of an image acquisition unit in the self-checkout terminal according to the first embodiment.
FIG. 5 is a perspective view illustrating a configuration example of the image acquisition unit in the self-checkout terminal according to the first embodiment.
FIG. 6 is a diagram illustrating a configuration example of lighting in the self-checkout terminal according to the first embodiment.
FIG. 7 is a diagram illustrating a configuration example of a camera of the image acquisition unit in the self-checkout terminal according to the first embodiment.
FIG. 8 is a diagram illustrating an example of a sensitivity characteristic of an imaging element of the camera in the image acquisition unit and a light-emission spectrum of each of light sources of the lighting in the self-checkout terminal according to the first embodiment.
FIG. 9 is a diagram illustrating a transmission characteristic in a filter of the camera in the image acquisition unit in the self-checkout terminal according to the first embodiment.
FIG. 10 is a display example in a user interface in the self-checkout terminal according to the first embodiment.
FIG. 11 is a state transition diagram schematically illustrating a flow of basic processing in the self-checkout terminal according to the first embodiment.
FIG. 12 is a flowchart for explaining a flow of processing performed by a processor of the self-checkout terminal according to the first embodiment.
FIG. 13 is a block diagram illustrating a configuration example of a self-checkout terminal according to a second embodiment.
FIG. 14 is a flowchart for explaining a flow of processing implemented by a processor of the self-checkout terminal according to the second embodiment.
FIG. 15 is a block diagram illustrating a configuration example of a self-checkout terminal according to a third embodiment.
FIG. 16 is a diagram illustrating a configuration example of a user interface in the self-checkout terminal according to the third embodiment.
FIG. 17 is a flowchart for explaining an example of settlement processing in the self-checkout terminal according to the third embodiment.
FIG. 18 is a block diagram illustrating a configuration example of a self-checkout terminal according to a fourth embodiment.
FIG. 19 is a diagram illustrating a first configuration example of an image acquisition unit in the self-checkout terminal according to the fourth embodiment.
FIG. 20 is a diagram illustrating a second configuration example of the image acquisition unit in the self-checkout terminal according to the fourth embodiment.

### DETAILED DESCRIPTION

In general, according to one embodiment, a checkout apparatus comprises a screen, an imaging unit, a product identification unit, and a settlement processing unit. The screen transmits light. The imaging unit captures an image of products through the screen. The product identification unit identifies all the products serving as settlement targets from the image captured by the imaging unit, and acquires information to settle for the identified products. The settlement processing unit performs settlement processing for the products identified by the product identification unit.

The apparatus may further comprise: lighting configured to emit near infrared light as illumination light to be applied from one surface side of the screen toward the screen.

Preferably, the imaging unit includes an image sensor that has a sensitivity characteristic to the near infrared light emitted from the lighting.

Accordingly, the user does not feel the illumination light dazzling even when the user directly views the illumination light.

The apparatus may further comprisea filter configured to cut out visible light components and is disposed on an optical path extending between the imaging unit and the products positioned on the other surface side of the screen with the screen interposed therebetween. With the characteristic, the filter cuts out stray light in the visible light region that is made incident from the outside of the terminal, and enables imaging of only components illuminated with light from the lighting.

The screen may be configured to cut out visible light components. Accordingly The filter can eliminate visible light which can cause stray light.

The apparatus may further comprise a reflector that is provided on the one surface side of the screen, and diffuses and reflects the illumination light emitted from the lighting toward the screen. Accordingly, the lighting is optically arranged to emit light toward the reflector, to prevent the outgoing illumination light from directly being made incident on the imaged surface of a product and prevent glossy reflection caused by the illumination light.

Preferably, the imaging unit is a camera that includes a two-dimensional image sensor.

Preferably, the imaging unit includes a linear image sensor configured to capture an image for a line in a main scanning direction, and further comprising: a moving mechanism that moves a position where the linear image sensor performs capturing in a sub-scanning direction. With this structure, the self-checkout apparatus can not only reduce the size of the imaging unit, but enable disposition of the lighting in a position close to the scan position, and thereby reduces the power consumption of the lighting.

Preferably, the product identification unit is configured to detect bar codes of the products from the captured image, and identifies the products by decoding the detected bar codes.

Preferably, the product identification unit extracts image regions of the products from the captured image, and identifies the products based on image features obtained from the image regions of the products.

Accordingly, the self-checkout apparatus can use a reasonable camera with low resolution, because the apparatus enables capturing from a near distance. In addition, because the self-checkout apparatus shortens the imaging distance from the camera to the product, the self-checkout terminal enables miniaturization of the terminal itself.

The apparatus may further comprise: a biometric information acquisition unit that acquires biometric information of a settler; and a biometrics authentication unit that performs biometrics authentication using the biometric information acquired by the biometric information acquisition unit and biometric information of members stored in a database.

Preferably, if the settler is identified as a specific member by the biometrics authentication performed by the biometrics authentication unit, the settlement processor performs settlement processing using registered information of the member.

Embodiments will be explained, as non-limiting examples, hereinafter with reference to drawings.

First, the following is explanation of a self-checkout terminal (checkout apparatus, settlement apparatus) 1 according to the embodiments.

The self-checkout terminal according to the embodiments is an apparatus that identifies each of all the products serving as settlement targets and set in a predetermined region, and performs settlement processing on all the identified products. The self-checkout terminal 1 is installed in, for example, a store to sell products. The self-checkout terminal 1 may be installed as a self-register device (self-checkout machine) that the user oneself operates. The self-checkout terminal 1A may be operated as a register operated by a store clerk. The self-checkout terminal according to the embodiments described later is supposed to be used in in an operation form in which the user oneself sets all the products serving as settlement targets in a predetermined region.

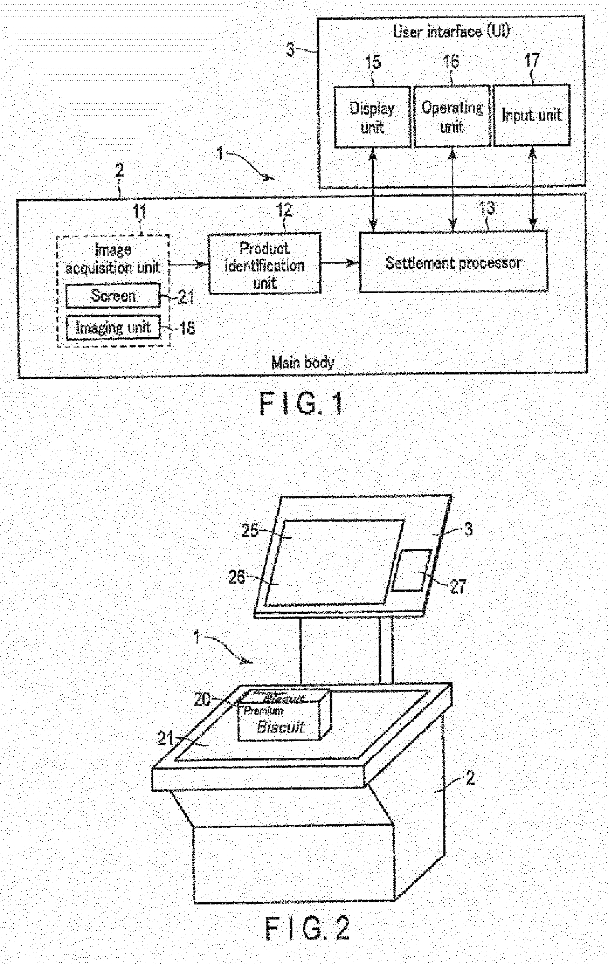

FIG. 1 is a diagram illustrating a configuration of basic functions of the self-checkout terminal (checkout apparatus) 1 according to the embodiments.

As illustrated in FIG. 1, the self-checkout terminal 1 includes a main body 2 and a user interface (UI) 3. The self-checkout terminal 1 includes an image acquisition unit 11, a production identification unit 12, a settlement processor 13, a display unit 15, an operating unit 16, and an input unit 17. In the example illustrated in FIG. 1, the main body 2 includes functions of the image acquisition unit 11, the product identification unit 12, and the settlement processor 13. The user interface 3 includes functions of the display unit 15, the operating unit 16, and the input unit 17.

The image acquisition unit 11 includes an imaging unit 18 and a screen 21. The imaging unit 18 acquires a two-dimensional image including an image of one or a plurality of products serving as settlement targets. The imaging unit 18 optically captures an image of products through the screen 21. The image acquisition unit 11 may be any unit that captures image information to identify individual products by the product identification unit 12. For example, the image acquisition unit 11 may read an image with near infrared rays. The image acquisition unit 11 supplies the captured image to the product identification unit 12.

The product identification unit 12 identifies each of one or a plurality of products included in the image (captured image) supplied from the image acquisition unit 11. The product identification unit 12 includes an image processor. The product identification unit 12 extracts information serving as a clue to identify each of the products from the captured image using the image processor. For example, the product identification unit 12 extracts images of bar codes printed on the respective products from the captured image. The product identification unit 12 identifies all the products existing in the captured image, based on the information of the products extracted from the captured image. The product identification unit 12 supplies information (product information) indicating the identified products to the settlement processor 13.

The product identification unit 12 is not limited to the structure of identifying a product based on an image of a bar code thereof. The product identification unit 12 may be any unit that identifies individual products from the captured image. For example, the product identification unit 12 may identify products based on image feature amounts extracted from images of the products.

The settlement processor 13 settles a bill for all the products identified by the product identification unit 12. The settlement processor 13 performs settlement processing on all the products in accordance with information that is input by the user with the user interface 3. For example, the settlement processor 13 performs settlement processing on all the products in accordance with information that is input by the user using the operating unit 16, while displaying information related to the settlement on the display unit 15. The settlement processor 13 performs settlement based on information related to the settlement and acquired by the input unit 17.

The display unit 15 displays display information supplied from the main body 2. For example, the display unit 15 displays information related to the products, information related to the settlement, input guidance, or an operation guide.

The operating unit 16 receives information that is input by the user (operator). The operation unit 16 may be a touch screen (touch panel) provided on the display screen of the display unit 15, or a numeric keypad or buttons of a keyboard. The operating unit 16 notifies the settlement processor 13 of the input information.

The input unit 17 inputs information related to settlement. For example, the input unit 17 reads information used for settlement processing from a storage medium such as a card or a mobile terminal presented by the user. The input unit 17 is not limited to a card reader or the like, but may be any unit to input information related to settlement. The input unit 17 supplies the input information to the settlement processor 13.

FIG. 2 is a diagram illustrating a configuration example of an external appearance of the self-checkout terminal according to the embodiments.

As illustrated in FIG. 2, the self-checkout terminal 1 includes the main body 2 and the user interface 3. The main body 2 includes a screen 21 on an upper surface thereof. The screen 21 serves as a region in which a product 20 serving as a settlement target is set. All the products 20 serving as settlement targets are placed on the screen 21. The main body 2 has functions of the image acquisition unit 11, the product identification unit 12, and the settlement processor 13 illustrated in FIG. 1.

The user interface 3 includes a display 25, a touch screen 26, and a card processor 27, and the like. The display 25 functions as the display unit 15 illustrated in FIG. 1. The touch scree 26 functions as the operating unit 16 illustrated in FIG. 1. The card processor 27 functions as the input unit 17.

The embodiments will be further explained in detail as specific configuration examples of the self-checkout terminal 1.

### (First Embodiment)

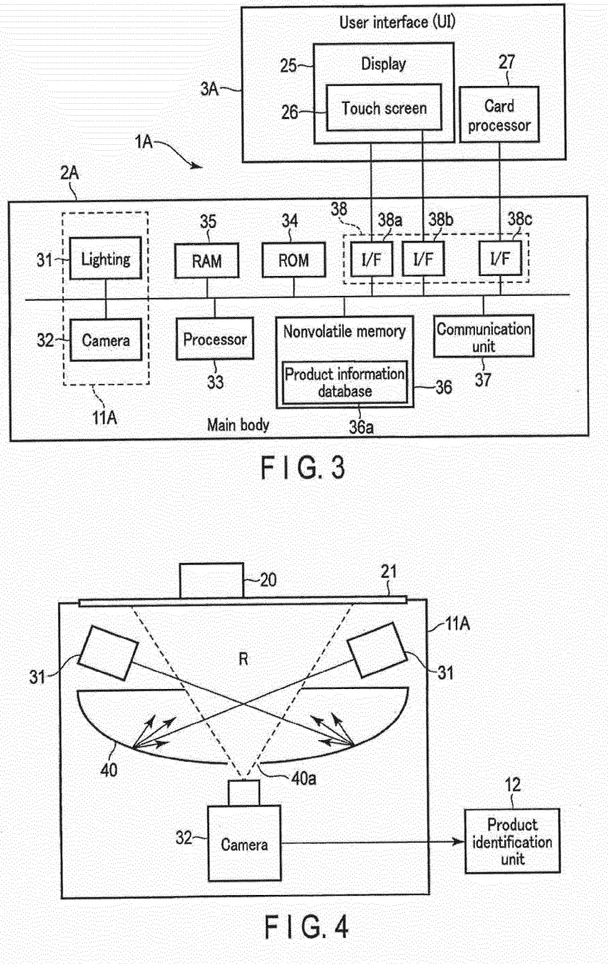

FIG. 3 is a block diagram illustrating a configuration example of a control system of a self-checkout terminal 1A according to a first embodiment.

A main body 2A includes lighting 31, a camera 32, a processor 33, a ROM 34, a RAM 35, a nonvolatile memory 36, a communication unit 37, and various interfaces (I/F) 38 (38a, 38b, and 38c). A user interface 3A includes a display 25, a touch screen 26, and a card processor 27.

The lighting 31 emits light to be applied to one or more products on the screen 21. The camera 32 captures an image of the one or more products through the screen 21. The camera 32 captures an image through the screen 21 to which light from the lighting 31 is applied. The camera 32 includes a two-dimensional image sensor having a sensitivity characteristic according to the light emitted from the lighting 31.

The lighting 31 and the camera 32 form an image acquisition unit 11A in the self-checkout terminal 1A. The processor 33 controls operations of the lighting 31 and the camera 32. A configuration example of the image acquisition unit 11A including the lighting 31 and the camera 32 in the self-checkout terminal 1A according to the first embodiment will be described in detail later.

The processor 33 is, for example, a CPU. The processor 33 executes a program stored in the ROM 34 or the nonvolatile memory 36, to implement various controls and processing functions. For example, the processor 33 functions as a controller that executes a program stored in the ROM 34 or the nonvolatile memory 36, to control the units. The processor 33 also implements various processing functions (such as the product identification unit and the settlement processor), by executing a program stored in the ROM 34 or the nonvolatile memory 36.

The ROM 34 is a nonvolatile memory that stores programs executed by the processor 33 and control data. The RAM 35 is a volatile memory that functions as a working memory. The RAM 35 temporarily stores work data. For example, the RAM 35 stores the images captured by the camera 32. The nonvolatile memory 36 is a rewritable nonvolatile memory. The nonvolatile memory 36 is, for example, a hard disk drive (HDD) or a solid state drive (SSD).

The nonvolatile memory 36 includes a product information database 36a that stores information related to products. The product information database 36a is a storage area in which information related to products is stored. The product information database 36a stores, for example, information such as price associated with identification information (such as a JAN code) of each product. The product information database 36a stores at least information to determine settlement bill of the product. The product information database 36a may be provided in an external device with which the self-checkout terminal 1A can communicate via the communication unit 37.

The communication unit 37 is a communication interface to communicate with an external device. The I/F 38 (38a, 38b, and 38c) are interfaces that connect the units of the user interface 3. For example, the I/F 38a is an interface connected to the display 25. The I/F 38b is an interface connected to the touch screen 26. The I/F 38c is an interface connected to the card processor 27.

The display 25 displays information on a screen thereof in accordance with a control signal that is provided from the processor 33 through the I/F 38a. For example, the display 25 displays operation guidance for users.

The touch screen 26 senses a position where a person touches on the display screen of the display 25. The touch screen 26 outputs a signal indicating the position where a person touches to the processor 33 through the I/F 38b.

The card processor 27 processes a card. For example, the card processor 27 is a reader/writer for IC cards (smart cards). The card processor 27 obtains settlement information from a card such as a credit card. The card processor 27 operates in accordance with a control command provided from the processor 33 through the I/F 38c. The card processor 27 supplies information (such as information related to settlement) that is read from a card to the processor 33 through the I/F 38c.

The following is explanation of the configuration of the image acquisition unit 11A in the self-checkout terminal 1A according to the first embodiment.

FIG. 4 is a diagram illustrating a configuration example of the image acquisition unit 11A in the self-checkout terminal 1A according to the first embodiment.

As illustrated in FIG. 4, the image acquisition unit 11A is provided in the main body 2A. The image acquisition unit 11A includes a screen 21, the lighting 31, the camera 32, and a reflector 40.

The screen 21 is placed on an upper surface of the main body 2A. The lighting 31 emits light (illumination light) to illuminate the product 20 on the screen from a lower side (one surface side) of the screen 21. The reflector 40 is disposed to reflect light from the lighting 31 toward the screen 21 from below. The camera 32 is set under the screen 21 to be directed toward the screen 21. The camera 32 captures an image of the product (the product located on the screen) through the screen 21 from the lower side of the screen 21.

The screen 21 is formed of a member that transmits illumination light. For example, the screen 21 is formed of transparent or translucent glass or plastic. The screen 21 is a table on which the product 20 serving as settlement target is placed. In other words, the screen 21 serves as the predetermined region in which the product 20 serving as settlement target is set. The product 20 is placed on the upper surface of the screen 21 such that an imaged surface of the product 20 is positioned at the bottom. In other words, the product 20 is set on the other surface of the screen 21 such that an imaged surface of the product 20 faces the screen 21. The product 20 that is set on the screen 21 comes to a state where the imaged surface can be captured from the lower side (one surface) of the screen 21.

The lighting 31 emits light to provide the imaged surface of the product to be imaged by the camera 32 with sufficient illuminance. The reflector 40 guides the light from the lighting 31 to the imaged surface of the product located on the screen 21. The reflector 40 is, for example, a diffuse reflector. The light (illumination light) emitted from the lighting 31 is applied to the imaged surface of the product 20 on the screen 21 via the reflector 40.

The lighting 31 is optically arranged to emit light toward the reflector 40, to prevent the outgoing illumination light from directly being made incident on the imaged surface of the product 20 and prevent glossy reflection caused by the illumination light. The reflected light from the reflector 40 illuminates the imaged surface of the product 20 through the screen 21 as diffused illumination light. The lighting 31 and the reflector 40 are attached such that the lighting 31 and the reflector 40 do not obstruct the imaging field of the camera 32.

The light (illumination light) emitted from the lighting 31 is reflected by the reflector 40 to illuminate the whole surface of the screen 21. The illumination light reflected by the reflector 40 is applied to the above through the screen 21 in portions where the product 20 is not placed. For this reason, supposing that the illumination light is visible light such as white light, the user who operates the self-checkout terminal 1A may feel the screen 21 dazzling. For this reason, the lighting 31 may use light that falls out of the wavelength region of visible light, as the illumination light. For example, the lighting 31 uses near infrared light as the illumination light. If the illumination light emitted from the lighting 31 is near infrared light, the user does not feel the illumination light dazzling even when the user directly views the illumination light.

The camera 32 captures an image through the screen 21 from the lower side of the screen 21. The camera 32 captures an image including a surface of the product 20 placed on the screen 21. The camera 32 stores the captured image in the RAM 35 of the main body 2. The processor 33 that functions as the product identification unit 12 in the main body 2 performs image processing on the captured image stored in the RAM 35. Because the camera 32 captures an image of the product irradiated with the illumination light, the camera 32 captures a near infrared image if near infrared light is used as the illumination light.

The camera 32 focuses on a part around the upper surface (surface which at least part of the product 20 placed on the screen 21 contacts) of the screen 21. Thereby, the camera 32 is enabled to perform capturing in a state of focusing on the imaged surface of the product 20 at least part of which contacts the upper surface of the screen 21. For example, even if a plurality of products is placed on the screen 21, the imaged surface of each of the products contacts the upper surface of the screen 21, regardless of the shape of each product. For this reason, the camera 32 that focuses on the upper surface of the screen 21 can easily capture an image (image of products) in a state of focusing on the imaged surfaces of all the products.

In other words, the camera 32 can focus on the imaged surfaces of all the products on the screen 21 more easily than in the case of capturing a plurality of products having different shapes and placed on a plane from above. Therefore, the camera 32 may have a small depth of field, and is enabled to perform capturing with sufficiently high resolution and with a close capturing distance. Because the camera 32 can perform capturing at close capturing distance, the self-checkout terminal itself can be miniaturized.

The following is a specific configuration example of the image acquisition unit 11A.

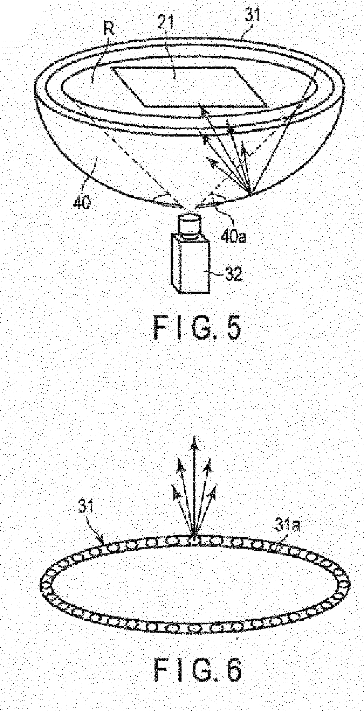

FIG. 5 is a perspective view of a configuration example of the image acquisition unit 11A. FIG. 6 is a diagram illustrating a configuration example of the lighting 31. FIG. 6 illustrates a configuration of a lower part (surface opposite to the surface illustrated in FIG. 5), and illustrates a state in which illumination light is emitted upward.

In the configuration example illustrated in FIG. 5 and FIG. 6, the lighting 31 includes a plurality of light sources 31 a that are arranged in an annular shape. Each of the light sources 31 a is formed, for example, an LED (Light Emitting Diode) light source. Each of the light sources 31 a emits near infrared light. The light sources 31 a are arranged to emit near infrared light toward the reflector 40.

The reflector 40 has a hemispherical shape, and diffuses and reflects light (illumination light) from each of the light sources 31 a toward the screen 21. The reflection 40 has an opening portion 40a in a center part thereof. The camera 32 captures an image in an imaging range R including the upper surface of the screen 21, through the opening portion 40a of the reflector 40.

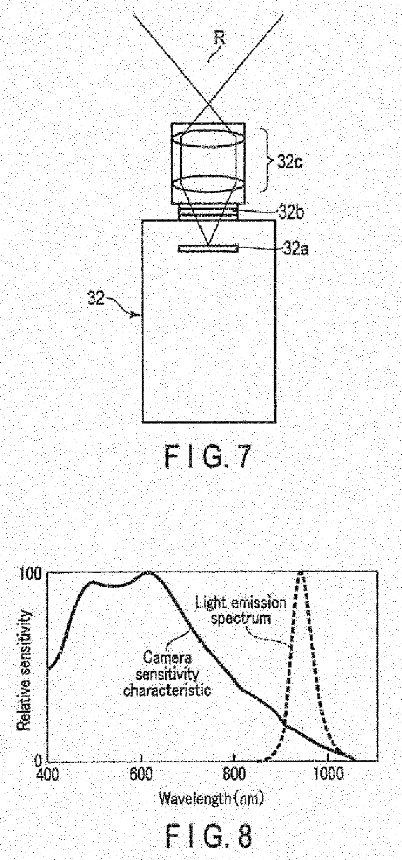

FIG. 7 is a diagram illustrating a configuration example of the camera 32.

In the configuration example illustrated in FIG. 7, the camera 32 includes an imaging element 32a, a filter 32b, and a lens group 32c. The lens group 32c condenses light from the imaging range R, and applies the condensed light to the imaging element 32a. The lens group 32c is formed of a plurality of lenses. The filter 32b filters the light applied from the lens group 32c to the imaging element 32a. The filter 32b eliminates, for example, light that causes stray light. The imaging element 32a is a two-dimensional image sensor which is formed of, for example, a CCD (Charged-Coupled Devices) or a CMOS (Complementary Metal-Oxide-Semiconductor). The imaging element 32a has a sensitivity characteristic according to the characteristics of light emitted from the lighting 31. For example, if the illumination light from the lighting 31 is near infrared light, the imaging element 32a has a sensitivity characteristic extending from the wavelength region of visible light to the wavelength region of near infrared light. In such a case, the filter 32b eliminates visible light that causes stray light. Thereby, the imaging element 32a can acquire image information with high accuracy.

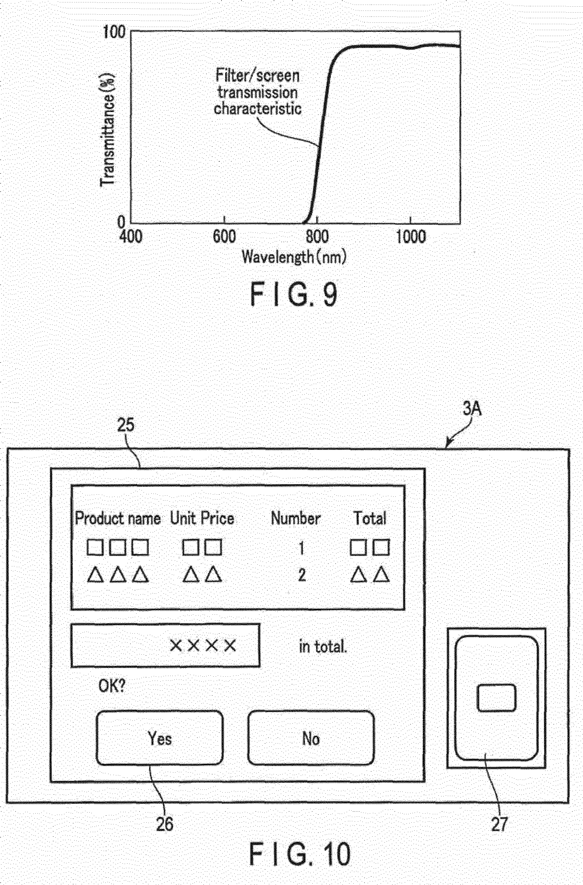

FIG. 8 illustrates an example of a sensitivity characteristic in the imaging element 32a of the camera 32 and a light emission spectrum in each of the light sources 31 a of the lighting 31. FIG. 9 is a diagram illustrating a transmission characteristic in the filter 32b of the camera 32.

According to FIG. 8, the imaging element 32a has a sensitivity characteristic in both wavelength regions of 400 to 700 nm serving as a visible light wavelength region and 700 to 1000 nm serving as a near infrared region. In addition, in the example illustrated in FIG. 8, the light emission spectrum of each light source 31 a has a peak around 940 nm, and has a light emission intensity only in the near infrared wavelength region. As illustrated in FIG. 9, the filter 32b has a characteristic of transmitting light of 800 nm or more. With the characteristic, the filter 32b cuts out stray light in the visible light region that is made incident from the outside of the terminal, and enables imaging of only components illuminated with light from the light sources 31 a.

The screen 21 may be provided with a characteristic similar to that of the filter 32b. Also in such a case, the screen 21 is enabled to cut out external light that enters the terminal, and obtains a similar effect. Both the filter 32b and the screen 21 may be provided with the transmission characteristic (wavelength filtering function) illustrated in FIG. 9, to achieve higher stray light isolation ability.

As described above, the image acquisition unit 11A has the structure in which the wavelength of illumination light emitted from the lighting 31 is set to the near infrared region, and includes the filter 32b that cuts out visible light at a portion before the camera 32 capturing an image. With the structure, the self-checkout terminal 1A does not cause the user (operator) to feel the illumination light dazzling, but efficiently isolates illumination light that enters from the outside of the terminal and causes stray light. Consequently, the image acquisition unit 11A of the self-checkout terminal 1A obtains a bright captured image with good image quality.

The following is explanation of a display example of the user interface 3A in the self-checkout terminal 1A.

FIG. 10 illustrates a display example in the display 25 of the user interface 3A.

In the user interface 3A, the display 25 displays information such as information (product information) related to the products serving as settlement targets, information (settlement information) related to settlement, and information related to operations (operation information). For example, the display 25 displays the product names serving as settlement targets, the unit prices thereof, the number of each of the products, and subtotals thereof, as the product information. The display 25 also displays a total sum for settlement, as the settlement information. The display 25 also displays a selection menu and the like, as the operation information. The display 25 can display buttons (icons) that can be selected with the touch screen 26, in the selection menu serving as the operation information.

For example, in the display example illustrated in FIG. 10, the display 25 displays an icon that displays "Yes", and an icon that displays "No". The user selects one of the icon "Yes" and the icon "No". The user touches the portion displaying "Yes", if the displayed product information and settlement information are satisfactory. The user touches the portion displaying "No", if the displayed product information and settlement information are not satisfactory (if the information requires correction).

If the user touches the portion displaying "Yes", the touch screen 26 notifies the processor 33 of a sensing signal indicating an input to the icon "Yes". With the signal, the processor 33 detects selection of "Yes". When the icon "Yes" is selected, the processor 33 starts settlement processing.

If the user touches the portion displaying "No", the touch screen 26 notifies the processor 33 of a sensing signal indicating an input to the icon "No". With the signal, the processor 33 detects selection of "No". When the icon "No" is selected, the processor 33 performs processing of cancelling the settlement, or processing of correcting the product information or the settlement information.

The following is explanation of a flow of processing in the self-checkout terminal 1A according to the first embodiment.

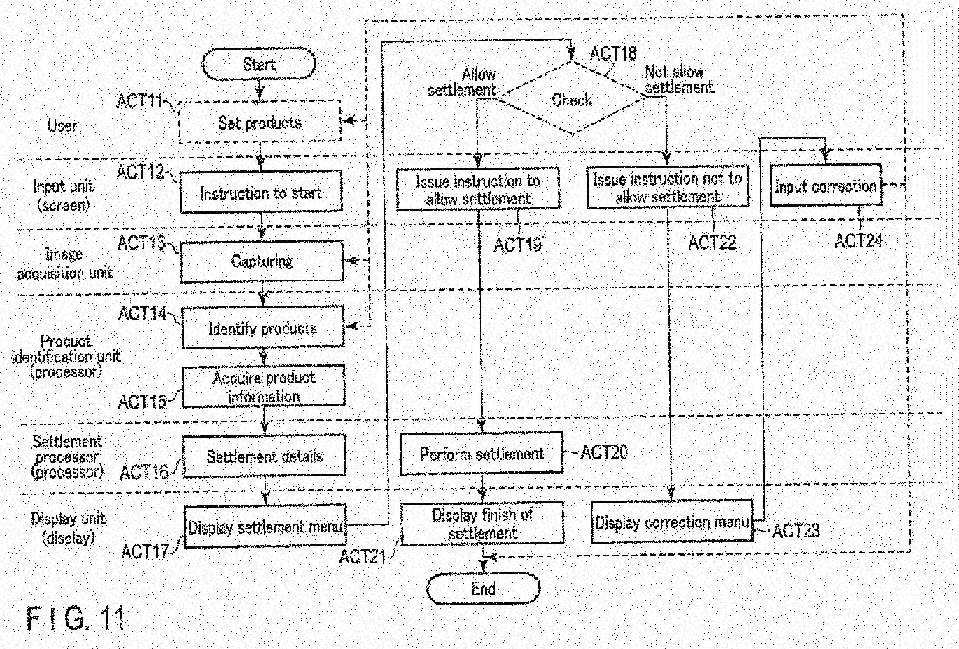

FIG. 11 is a state transition drawing schematically illustrating a flow of basic processing in the self-checkout terminal 1A.

The user sets all the products serving as settlement targets on the screen 21 (ACT 11). After setting the products on the screen 21, the user issues an instruction to start checkout processing using the touch screen 26 of the user interface 3. The touch screen 26 senses the instruction input by the user to start checkout processing (ACT 12), and notifies the processor 33 of the instruction.

The processor 33 starts checkout processing in accordance with the instruction input to the touch screen 26 to start checkout processing. For example, the processor 33 may display, on the display 25, buttons (icons) that can be selected with the touch screen 26 to instruct the processor 33 to start the processing. In such a case, the processor 33 starts processing in response to sensing of a touch on the icon for issuing an instruction to start the processing. The processor 33 may start checkout processing when the card processor 28 reads a card presented by the user.

When the processor 33 starts the checkout processing, the processor 33 performs capturing of an image by the image acquisition unit 11A (ACT 13). The image acquisition unit 11A turns on the lighting 31 in response to a control instruction from the processor 33, to perform capturing of the imaging range including the screen 21 by the camera 21. The camera 32 stores the captured image in the RAM 35.

After the camera 32 performs capturing, the processor 33 performs image processing using the image processing function of the product identification unit 12 on the image captured by the camera 32 (ACT 14). The processor 33 extracts image information serving as a clue for identifying each product from the captured image by the image processing function. For example, the processor 33 detects bar codes as image information to identify the products from the captured image. The processor 33 specifies identification information to identify the products based on the bar codes detected from the captured image. When the processor 33 specifies the identification information of each of the products, the processor 33 obtains product information of each of the products from the product database, based on the identification information of each of the products (ACT 15).

When the processor 33 obtains product information of each of the products, the processor 33 collects the product information of the products by the settlement processing function, to determine the settlement details for all the purchased products (ACT 16). For example, the processor 33 calculates the total sum of all the purchased products, and determines the settlement details. When the processor 33 determines the settlement details, the processor 33 displays a settlement menu picture including settlement information indicating the settlement details on the display 25 (ACT 17). For example, the processor 33 displays a guide as illustrated in FIG. 10 on the display 25, as the settlement menu picture.

After the settlement menu picture is displayed, the processor 33 comes to a state of waiting for a user's input indicating whether the settlement is allowed or not. The user checks the settlement details with the settlement menu picture. If the user determines that the settlement can be performed as a result of checking the settlement details (ACT 18, settlement is allowed), the user inputs an instruction to allow settlement with the touch screen 26. If the user determines that the settlement cannot be performed (ACT 18, settlement is not allowed), the user inputs an instruction not to allow settlement with the touch screen 26.

When an instruction to allow settlement is input to the touch screen 26 (ACT 19), the processor 33 performs settlement processing on the settlement details (ACT 20). For example, the processor 33 settles the bill by a card presented by the user to the card processor 27. When the settlement is finished, the processor 33 displays a guide indicating that the settlement is finished (normal finish of checkout) on the display 25 (ACT 21), and ends the processing.

If an instruction not to allow settlement is input to the touch screen 26 (ACT 22), the processor 33 displays a correction menu picture on the display 25 (ACT 23). For example, the correction menu may be a menu to cause the user to select cancellation of the checkout processing, reset of the products, re-capturing of a product image, or re-execution of the product identification processing. The user inputs correction details with the touch screen 26 in a state where the correction menu picture is displayed (ACT 24). The processor 33 re-executes or cancels the processing in accordance with the correction details input by the user.

For example, if the user inputs an instruction to cancel the processing in the correction menu, the processor 33 cancels the processing. If the user inputs an instruction to reset the products, the processor 33 displays a guide to set the products onto the screen 21 on the display 25, and executes the processing from ACT 11 again. If the user inputs an instruction to re-capture the product image, the processor 33 returns to ACT 13, to perform re-capturing by the image acquisition unit 11A. If the user inputs an instruction to re-execute the product identification processing, the processor 33 returns to ACT 14, to re-execute image processing and product information inquiry processing.

The following is detailed explanation of the processing performed in the main body 2A of the self-checkout terminal 1A according to the first embodiment.

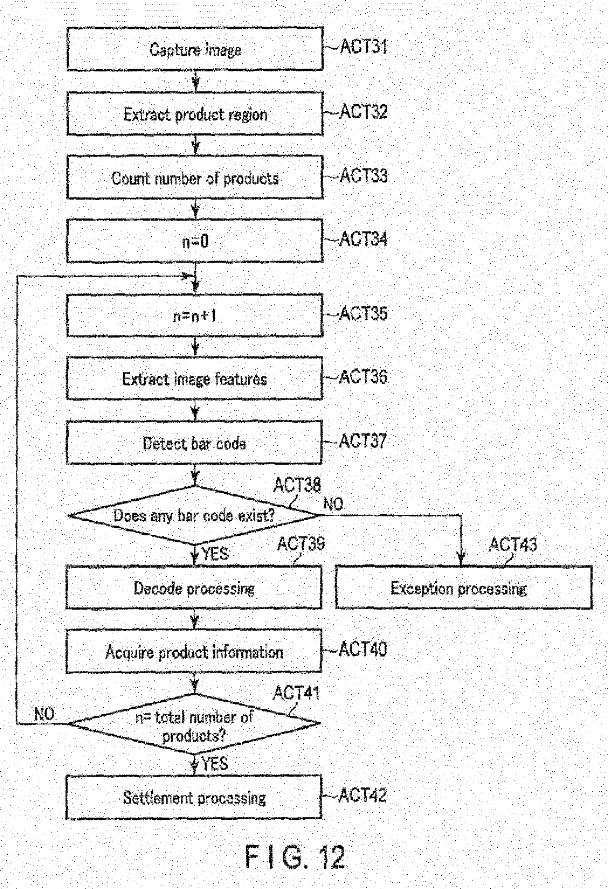

FIG. 12 is a flowchart for explaining a flow of processing performed by the processor 33 of the self-checkout terminal 1A. The processing example illustrated in FIG. 12 is processing including image processing to identify products based on bar codes, and processing of acquiring product information of the identified products.

The processor 33 captures an image of the imaging range R including the screen 21 on which the products 20 are set by the image acquisition unit 11A (ACT 31). For example, the processor 33 causes the lighting 31 to emit illumination light, and causes the camera 32 to capture an image, in accordance with an instruction to start processing. The camera 32 of the image acquisition unit 11A stores the captured image in a memory such as the RAM 35. When the captured image is held in the RAM 35, the processor 33 performs image processing on the captured image, as the image processing function of the product identification unit 12.

When the captured image is acquired, the processor 33 extracts image regions of the respective products in the captured image (ACT 32). For example, the processor 33 extracts image regions of packages of the respective products, as the image regions of the respective products in the captured image. The processor 33 counts the number of extracted products, each time the processor 33 extracts an image region of a package of a product (ACT 33). When the total number N of the products in the captured image is counted (extraction of the image regions of all the products is finished), the processor 33 performs processing to identify each of the extracted products.

In the first embodiment, suppose that a bar code is printed on the package of each product 20 serving as a settlement target. In addition, each product 20 is set on the screen 20 such that the camera 32 can capture an image of a surface of the product 20 on which the bar code is printed (a bar code printed surface). The camera 32 can capture an image of a package of the product including the bar code, when the product 20 is in a state of being set on the screen 21 with the bar code printed surface facing the camera 32.

The image captured by the camera 32 in a state where the product 20 is properly set on the screen 21 includes an image region of a product package indicating an external circumference of the package of the product 20. In addition, the image region of the product package in the captured image includes an image region of a bar code. Therefore, the processor 33 extracts the image region of the package of the product from the captured image, as image processing, and further extracts the image region of the bar code from the image region of the product package.

If a plurality of products exists on the screen 21, the processor 33 performs processing to extract an image region of a bar code, on each of the image regions of the packages of the respective products. For this reason, the processor 33 initializes (n=0) a variable n for counting the number of processed products (ACT 34). After initializing the variable n, the processor 33 changes the variable n to satisfy "n=n+1" (ACT 35), and performs product identification processing on the nth product.

In the processing example illustrated in FIG. 12, the processor 33 extracts image features related to the bar code from the package region of the product (ACT 36), as the product identification processing, and narrows down a possible image bar code image region (ACT 37). When the processor 33 narrows down a possible image bar code image region, the processor 33 determines whether the narrowed image region is a bar code (ACT 38). If the processor 33 determines that the narrowed image region is a bar code (ACT 38, YES), the processor 33 decodes the bar code (ACT 39).

The processor 33 converts information obtained by decoding the bar code into a JAN code serving as identification information of the product corresponding to the bar code symbol. The processor 33 searches (refers to) the product database 36a based on the JAN code obtained from the bar code, to acquire product information of the product (ACT 40). The processor 33 extracts information necessary for the settlement, such as the price of the product, from the acquired product information of the product. For example, the processor 33 stores the information extracted as the information necessary for the settlement in a memory such as the RAM 35.

When the processor 33 extracts (holds) information necessary for the settlement related to the nth product, the processor 33 determines whether the number n of the products subjected to identification processing reaches the total number N of the counted products (ACT 41). If the processor 33 determines that the number n of the identified products does not reach the total number N of the products (ACT 41, NO), the processor 33 returns to above ACT 35, and performs identification processing on the image region (package region) of the next product.

If the processor 33 determines that the number n of the identified products reaches the total number N of the products (ACT 41, YES), the processor 33 combines the extracted information of the respective products, and performs settlement processing on all the products (ACT 42). For example, the processor 33 fixes the settlement details, and performs the settlement processing using a card presented by the user if the user confirms the fixed settlement details.

If the processor 33 determines that no bar code can be detected from the image region of a product (ACT 38, NO), the processor 33 performs exception processing (ACT 43). For example, the processor 33 determines that product identification for the package region of the product is impossible, and performs error processing. The error processing may be re-execution of the processing from ACT 31, ACT 32, or ACT 36, or may be cancellation of a series of processing. The processor 33 may identify the product by processing other than the product identification processing using a bar code, as the exception processing.

As described above, the self-checkout terminal according to the first embodiment has the structure in which the camera that is set under the screen captures an image of an imaged surface of the product placed on the screen. With the structure, the self-checkout terminal can maintain a substantially fixed imaging distance from the camera to the imaged surface (the surface on the side contacting the screen) of the product, regardless of the shape and the size of the product. Consequently, the self-checkout terminal can easily obtain a captured image focused on the package surface of the product, regardless of the performance of the camera. For example, the self-checkout terminal can use a reasonable camera with low resolution, because the terminal enables capturing from a near distance. In addition, because the self-checkout terminal shortens the imaging distance from the camera to the product, the self-checkout terminal enables miniaturization of the terminal itself.

The self-checkout terminal according to the first embodiment includes the lighting that emits near infrared light to be applied to an imaged surface of a product on the screen, and the camera that captures a near infrared light image. With the structure, the self-checkout terminal prevents the user from being dazzled by the illumination light applied from the lower side of the screen.

In addition, the self-checkout terminal according to the first embodiment includes the lighting emitting illumination light of near infrared light, and is provided with the filter that cuts out a wavelength component of visible light for the light made incident on the imaging element of the camera. With the structure, the self-checkout terminal is hardly influenced by illumination environments outside the apparatus, and can acquire captured images with high accuracy.

### (Second Embodiment)

The following is explanation of a self-checkout terminal according to a second embodiment.

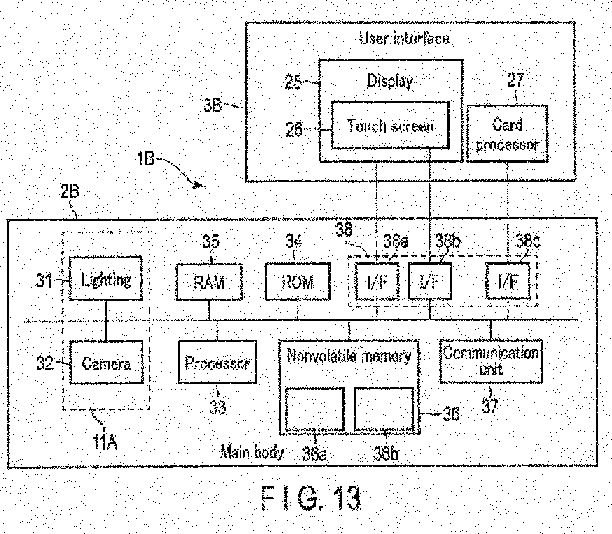

FIG. 13 is a block diagram illustrating a configuration example of a self-checkout terminal 1 B according to the second embodiment.

The self-checkout terminal 1 B has functions similar to those of the self-checkout terminal 1A described in the first embodiment, and further has a function of identifying a product from an image of the product itself. The self-checkout terminal 1 B has a function of identifying the product by another processing, as well as identifying the product based on an image of a bar code in a captured image. For example, a processor 33 serving as a product identification unit 12 has a function of identifying a product by identification processing on an image (image of a package of the product) of the product included in a captured image. In the following explanation, suppose that the self-checkout terminal 1 B identifies a product that could not be identified with a bar code, by recognition processing on an image of the product.

In the configuration illustrated in FIG. 13, constituent elements that can be implemented with structures similar to those of the self-checkout terminal 1A are denoted by the same reference numerals, and detailed explanation thereof is omitted. For example, an image acquisition unit, a settlement processor, and a user interface of the self-checkout terminal 1 B can be implemented by elements similar to those of the self-checkout terminal 1A.

As illustrated in FIG. 13, the self-checkout terminal 1 B according to the second embodiment includes a main body 2B and a user interface 3B. The main body 2B includes lighting 31, a camera 32, a processor 33, a ROM 34, a RAM 35, a nonvolatile memory 36, a communication unit 37, and various interfaces (I/F) 38 (38a, 38b, and 38c). The user interface 3B includes a display 25, a touch screen 26, and a card processor 27. The user interface 3B can be implemented with a structure similar to that of the user interface 3B described in the first embodiment.

The processor 33 executes a program stored in the ROM 34 or the nonvolatile memory 36, to implement various controls and processing functions. The processor 33 of the self-checkout terminal 1 B has a processing function (image recognition function) of identifying a product based on an image of the product, in addition to the processing function explained with respect to the self-checkout terminal 1A. The processor 33 implements the image recognition function by executing a program stored in the ROM 34 or the nonvolatile memory 36.

The nonvolatile memory 36 further includes a product image database (DB) 36b that stores information related to images of products. The product image database (DB) 36b is a storage region that stores information related to images of products (images of packages of products). The product image DB 36b stores information to identify a product from images obtained by capturing the product in various directions (images obtained by capturing the product placed in various orientations on the screen), for each of the individual products. For example, the product image DB 36b stores information associating an image feature that can be extracted from images of each of products with identification information (such as JAN code) of each of products. The product image DB 36b may be provided in an external device that the terminal can communicate with via the communication unit 37.

For example, the product image DB 36b stores identification information obtained by decoding bar codes of products and equivalent to JAN codes of the products in association with image features of the respective products. The product image DB 36b stores image features (image feature amounts) obtained by processing of extracting image features on captured images of packages of the respective products in association with JAN codes of the respective products, in a database form. The image features of each product are extracted for each of the captured images of various orientations in which the product 20 may be placed on the screen 21, as well as the surface on which the bar code is printed.

The following is detailed explanation of a processing example performed in the main body 2B of the self-checkout terminal 1 B according to the second embodiment. A flow of basic processing in the self-checkout terminal 1 B is similar to the processing illustrated in FIG. 11.

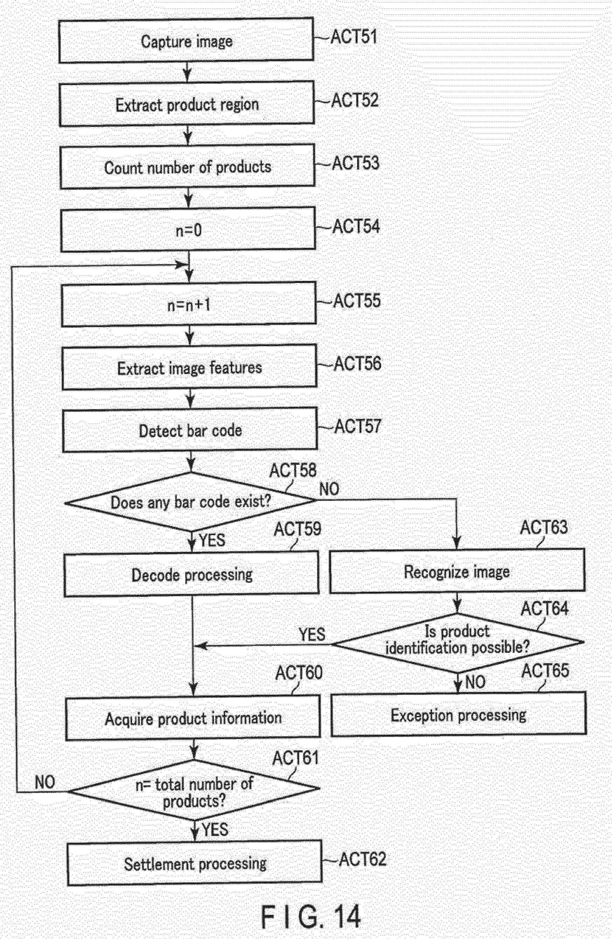

FIG. 14 is a flowchart for explaining a flow of processing implemented by the processor 33 of the self-checkout terminal 1 B.

The processing example illustrated in FIG. 14 is a processing example including processing of identifying a product that could not be identified with a bar code by processing of recognizing an image (package image) of the product, in addition to the processing illustrated in FIG. 12. For this reason, the processing in ACTS 51 to 62, and 65 illustrated in FIG. 14 may be the same as the processing in ACTS 31 to 43 illustrated in FIG. 12.

The processor 33 captures an image of the imaging range R including the screen 21 with the image acquisition unit 11A (ACT 51). When the processor acquires a image captured by the image acquisition unit, the processor 33 extracts image regions of the products in the captured image (ACT 52). For example, the processor 33 detects image regions of packages of the respective products, as the image regions of the products in the captured image. The processor 33 counts the number of extracted products (ACT 53), each time the processor 33 extracts an image region of a package of a product. When the total number N of the products in the captured image is counted (extraction of the image regions of all the products is finished), the processor 33 performs processing to identify each of the extracted products.

If a plurality of products exists on the screen 21, the processor 33 performs processing to extract an image region of a bar code, on each of the image regions of the packages of the respective products. For this reason, the processor 33 initializes (n=0) a variable n for counting the number of processed products (ACT 54). After initializing the variable n, the processor 33 changes the variable n to satisfy "n=n+1" (ACT 55), and performs product identification processing on the nth product.

In the processing example illustrated in FIG. 14, the processor 33 extracts image features related to the bar code from the package region of the product (ACT 56), as the product identification processing, and narrows down a possible image bar code image region (ACT 57). The processor 33 determines whether the narrowed image region is a bar code (ACT 58). If the processor 33 determines that the narrowed image region is a bar code (ACT 58, YES), the processor 33 decodes the bar code (ACT 59). The processor 33 converts information obtained by decoding the bar code into a JAN code serving as identification information of the product corresponding to the bar code symbol.

The processor 33 searches (refers to) the product database (DB) based on the JAN code obtained from the bar code, to acquire product information of the product (ACT 60). The processor 33 stores information necessary for the settlement, such as the price of the product, acquired from the acquired product information of the product, in a memory such as the RAM 35. After the processor 33 extracts (holds) information necessary for settlement of a product, the processor 33 returns to above ACT 54, if the number n of the identified products does not reach the total number N of the products (ACT 61, NO). If the number n of the identified products reaches the total number N of the products (ACT 61, YES), the processor 33 combines the extracted information of the respective products, and performs settlement processing on all the products (ACT 62).

If no bar code can be detected from the image region of the product extracted from the captured image (ACT 58, NO), the processor 33 performs image recognition (package recognition) processing to identify the product based on an image of the product (ACT 63). The processor 33 extracts an image feature from an image (image of the package of the product) of the product in the captured image, in the image recognition processing. The processor 33 may extract an image feature used for image recognition from the image region of the product in the processing of ACT 56, and hold the extracted image feature in the memory. The processor 33 identifies the product by matching the image feature extracted from the image region of the product with the image feature of the product stored in the product image DB 36b.

For example, the processor 33 determines similarity between the image features extracted from the image regions of the products and the image features of the products stored in the product image DB 36b. The processor 33 specifies a pair of an image feature extracted from an image region of a product and an image feature stored in the DB 36b, which has a maximum similarity therebetween. When the maximum similarity is equal to or higher than a predetermined threshold, the processor 33 determines that the product of the image region is the product corresponding to the image feature having the maximum similarity. When the maximum similarity is less than the predetermined threshold, the processor 33 may determine that image recognition processing on the image region of the product ends in failure (identification of the product by image recognition is impossible).

If identification of the product by image recognition succeeds (ACT 64, YES), the processor 33 acquires a JAN code serving as identification information of the product from the product image DB 36b. The processor 33 searches (refers to) the product information DB 36a based on the JAN code acquired by image recognition, to acquire information necessary for settlement of the product (ACT 60). The processor 33 holds the information necessary for settlement of the product in a memory such as the RAM 35, and goes to ACT 61.

If identification of the product by image recognition ends in failure (ACT 64, NO), the processor 33 performs exception processing (ACT 65). As the exception processing the processor 33 determines that identification of the product on the package region of the product is impossible, and performs error processing. The error processing may be re-execution of the processing from ACT 51, ACT 52, or ACT 56, or may be cancellation of a series of processing. The processor 33 may identify the product by processing other than the product identification processing using a bar code or image recognition, as the exception processing.

The self-checkout terminal according to the second embodiment as described above has the function of identifying the product from the feature of the image of the product, if no bar code can be extracted from the captured image. With the structure, the self-checkout terminal can identify the product from the image of the product itself (image feature of the package), even for a product (product a bar code printed surface of which is not placed to face the screen 21) a bar code of which cannot be recognized from the captured image. The self-checkout terminal according to the second embodiment can identify each of the products serving as the settlement targets and placed in desired orientations by the user. Consequently, the self-checkout terminal can perform checkout processing, without causing the user to caring about the orientations in which the products are placed. In addition, because the self-checkout terminal reduces cancellation due to error of processing of identifying the products or reduces the number of times of performing the processing of identifying the products again, the self-checkout terminal improves the users' convenience.

### (Third Embodiment)

The following is explanation of a self-checkout terminal according to a third embodiment.

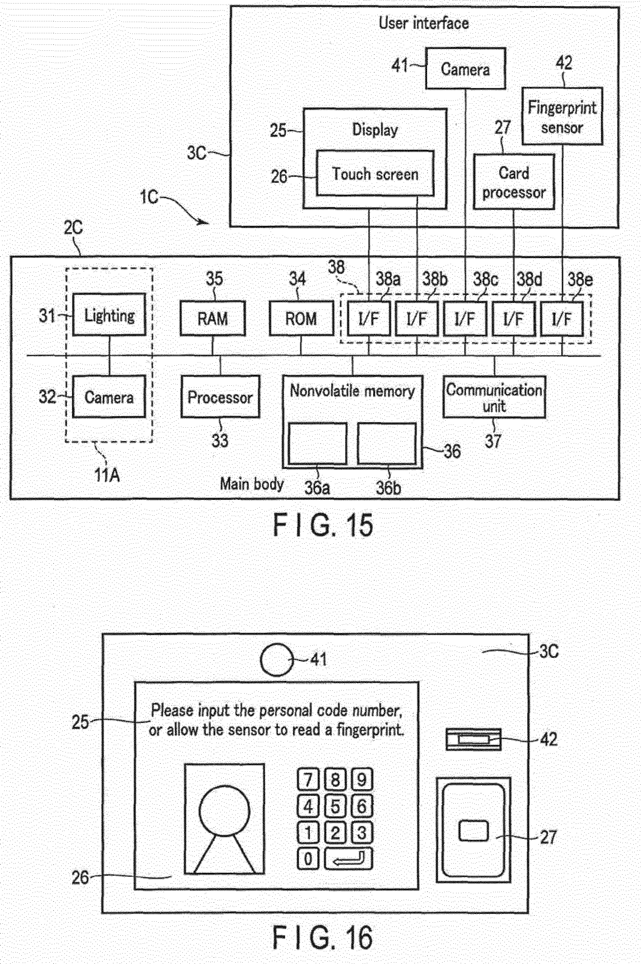

FIG. 15 is a block diagram illustrating a configuration example of a self-checkout terminal 1C according to the third embodiment.

The self-checkout terminal 1C according to the third embodiment performs settlement processing using biometrics authentication. This example illustrates the self-checkout terminal 1C obtained by adding settlement processing using biometrics authentication to the self-checkout terminal described in the first embodiment. The self-checkout terminal according to the third embodiment may be implemented by adding settlement processing using biometrics authentication to the self-checkout terminal described in the second embodiment.

FIG. 15 is a block diagram illustrating a configuration example of the self-checkout terminal 1C according to the third embodiment.

The self-checkout terminal 1C has functions similar to those of the self-checkout terminal 1A described in the first embodiment, and further includes a function of performing biometrics authentication as personal authentication. The self-checkout terminal 1C implements settlement processing by operation of the user oneself using biometrics authentication.

In the configuration illustrated in FIG. 15, constituent elements that can be implemented by structures similar to those of the self-checkout terminal 1A are denoted by the same reference numerals, and detailed explanation thereof is omitted. The structures of the image acquisition unit and the like of the self-checkout terminal 1C may be the same as those of the self-checkout terminal 1A described in the first embodiment.

As illustrated in FIG. 15, the self-checkout terminal 1C according to the third embodiment includes a main body 2C and a user interface 3C. The main body 2C includes a lighting 31, a camera 32, a processor 33, a ROM 34, a RAM 35, a nonvolatile memory 36, a communication unit 37, and various interfaces (I/F) 38 (38a, 38b, 38c, 38d, and 38e).

The processor 33 executes a program stored in the ROM 34 or the nonvolatile memory 36, to implement various controls and processing functions. The processor 33 of the self-checkout terminal 1C has a biometrics authentication function and a settlement processing function according to an authentication result, in addition to the processing function described in the self-checkout terminal 1A. The processor 33 of the self-checkout terminal 1C also has a processing function of performing face authentication as biometrics authentication, and functions as a biometrics authentication unit.

The nonvolatile memory 36 also includes a member information database (DB) 36c that stores information related to members. The member information DB 36c is a storage region that stores information related to members including authentication information for the respective members. The member information DB 36c stores member information that associates identification information of the respective members with authentication information (authentication information including biometrics information and a password) for the respective members. The member information DB 36c includes a face database that stores dictionary data for face authentication of the respective users, and a fingerprint database that stores dictionary data for fingerprint authentication of the respective users, as authentication information of the respective users. The face database stores feature amounts of faces of the respective users, as dictionary data for face authentication. The face database may store face images for registration of the respective users. The fingerprint database stores feature amounts of fingerprints of the respective users, as the dictionary data for fingerprint authentication. The fingerprint database may store fingerprint images for registration of the respective users.

The member information DB 36c stores information related to settlement for the respective users. For example, the member information DB 36c stores information related to cards (such as credit cards) used by the respective users for settlements. The member information DB 36c may store point information assigned according to the settlement sum for the respective users. The member information DB 36c may store information (such as purchase history information) related to the products bills for which the respective users settled. The member information DB 36c may be provided in an external device with which the self-checkout terminal 1 c can communicate via the communication unit 38.

FIG. 16 is a diagram illustrating a configuration example of the external appearance and a display example of the user interface 3C.

As illustrated in FIG. 15 and FIG. 16, the user interface 3C includes a display 25, a touch screen 26, a card processor 27, a camera 41, and a fingerprint sensor 42. The display 25, the touch screen 26, and the card processor 27 can be implemented by structures similar to those of the self-checkout terminal 1A described in the first embodiment.

The camera 41 photographs the user's face. The camera 41 functions as a biometric information acquisition unit that acquires face images serving as biometric information of users (settlers). The camera 41 is placed to be enabled to photograph the face of a user who operates the touch screen 26. The camera 41 is connected to an interface (I/F) 38d of the main body 2C. The camera 41 supplies the photographed image to the main body 2C via the I/F 38d. The camera 41 is controlled by the processor 33 that is connected thereto via the I/F 38f.

The fingerprint sensor 42 images (senses) a fingerprint of the user. The fingerprint sensor 42 includes a sensing unit over which the user's finger is held. For example, the fingerprint sensor 42 scans a fingerprint of the user's finger with the sensing unit. The fingerprint sensor 42 is connected to an interface (I/F) 38e of the main body 2c. The fingerprint sensor 42 supplies the photographed image to the main body 2C via the I/F 38e. The fingerprint sensor 42 is controlled by the processor 33 that is connected thereto via the I/F 38e.

In the example illustrated in FIG. 16, the display 25 displays a guide to input of a personal code number (password) or read of a fingerprint. The user inputs one's personal code number by selecting keys displayed on the display 25 with the touch screen 26. The fingerprint is read with the fingerprint sensor. In this state, the camera 41 photographs the face of the user, to photograph a face image of the user who is inputting the password or allowing the fingerprint sensor to read the fingerprint.

The processor 33 of the main body 2C acquires one of the password and the fingerprint image, together with the face image of the user, in the state where the display picture illustrated in FIG. 16 is displayed. In other words, the processor 33 enables acquisition of one of the password and the fingerprint image, in accordance with a result of biometrics authentication using the face image photographed by the camera 41.

The following is explanation of settlement processing in the self-checkout terminal 1C having the above configuration.

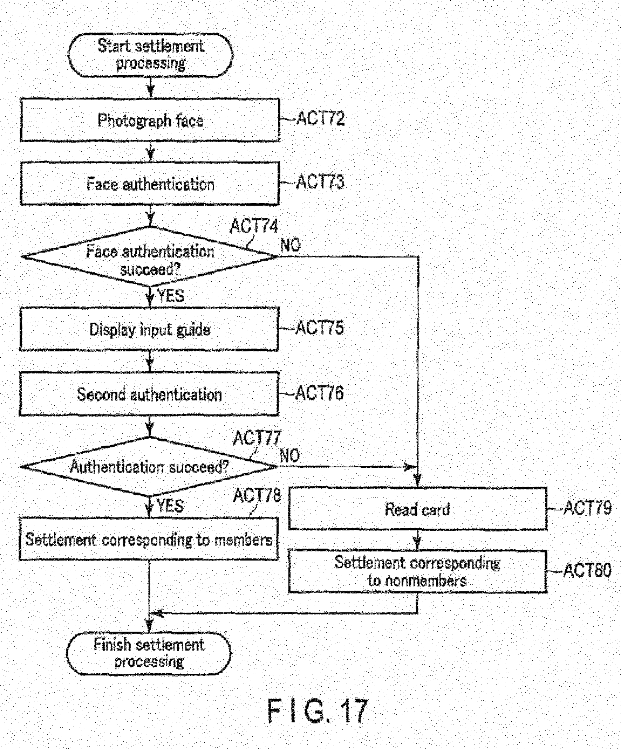

FIG. 17 is a flowchart for explaining an example of settlement processing in the self-checkout terminal 1C.

When settlement processing is started, the processor 33 photographs the user's face with the camera 41 (ACT 72). The camera 41 performs photographing in accordance with an instruction from the processor 33, and supplies the photographed image to the processor 33. The processor 33 acquires the photographed image photographed by the camera 41, and performs face authentication processing (biometrics authentication) (ACT 73). The camera 41 functions as the biometric information acquisition unit in ACT 72, and the processor 33 functions as the biometrics authentication unit in ACT 73.

The processor 33 detects an image region (face image) of the user's face from the photographed image photographed by the camera 41. The camera 41 may detect an image region (face image) of a face from the photographed image, and supply the detected face image to the processor 33. If a face image is detected from the photographed image of the camera 41, the processor 33 extracts a face feature amount from the detected face image. The processor 33 performs matching between the face feature amount detected from the photographed image and face feature amounts of the members registered in the face DB of the member information DB 36c.

For example, the processor 33 determines similarities between the face feature amount detected from the photographed image and the face feature amounts of the members registered in the face DB. The processor 33 specifies the maximum similarity among similarities with the respective members. The processor 33 determines whether the maximum similarity is equal to or higher than a predetermined threshold. If the maximum similarity is equal to or higher than the predetermined threshold, the processor 33 determines that the user is the member with the maximum similarity. The processor 33 determines the identification information (such as member ID) of the member, as a result of face authentication. If the maximum similarity is less than the predetermined threshold, the processor 33 determines that the user was not identified as any member by face authentication.

Although face authentication is performed after settlement processing is started in the above processing, face authentication processing may be started earlier than start of the settlement processing. For example, the processor 33 may perform photographing the face and face authentication processing in parallel with the processing of identifying the products. The processor 33 may be provided with a sensor that senses the user, and may perform photographing the face and face authentication processing directly after the sensor senses the user. The processor 33 may continuously perform photographing at predetermined cycles with the camera 41, to perform face authentication processing directly after the processor 33 detects a face from the photographed image.

Although the above processing example illustrates a processing example of performing face authentication as the first authentication processing, another biometrics authentication may be performed instead of face authentication. For example, the first authentication processing may be biometrics authentication using a voiceprint, an iris of the eye, a venous pattern of the hand, the retina of the eye, or the blinks of the eye.

If the user is identified as a specific member by face authentication (ACT 74, YES), the processor 33 performs member authentication to check that the user is the member specified by the face authentication. The processor 33 displays a guide to input of a fingerprint or a password as second authentication information on the display 25, to perform member authentication (ACT 75). When the user inputs one's fingerprint or password, the processor 33 performs personal authentication processing (second authentication processing) using the fingerprint or password (ACT 76). In the authentication processing, the processor 33 acquires authentication information (password or fingerprint information) of the member specified by face authentication from the member information DB 36c. The processor 33 collates the registered password (registered password) or registered fingerprint information (registered fingerprint information) acquired from the member information DB 36c with the password or fingerprint that is input by the user.

For example, if the processor 33 acquires a password that is input by the user with the touch screen 26, the processor 33 collates the input password with the registered password of the member specified by face authentication. If the fingerprint sensor 42 reads the user's fingerprint, the processor 33 collates the fingerprint information (input fingerprint information) that is read by the fingerprint sensor 42 with the registered fingerprint information of the member specified by face authentication.

If the input password or fingerprint matches with the authentication information of the member specified by face authentication, the processor 33 determines that the user is verified to be the member specified by face authentication. If it is verified that the user is a member (if member authentication succeeds) (ACT 77, YES), the processor 33 performs settlement processing using member information of the member registered in the member information DB 36c (ACT 78). For example, the processor 33 performs settlement processing using information related to the card of the member registered in the member information DB 36c.

If it is not verified that the user is a member (if member authentication ends in failure) (ACT 77, NO), the processor 33 regards the user as a user who is not registered as a member, and performs settlement processing for nonmembers (ACT 79 and ACT 80). For example, the processor 33 reads a card presented by the user with the card processor 27, as settlement processing for a nonmember (ACT 79). The processor 33 performs settlement processing using information that is read from the card presented by the user (ACT 80).

As described above, the self-checkout terminal according to the third embodiment checks whether the user is a member by biometrics authentication. If the self-checkout terminal verifies by biometrics authentication that the user is a member, the self-checkout terminal performs settlement processing on the user (member) using member information. This structure enables the member to perform settlement using the registered member information, without a card or the like. Consequently, the structure enables members to perform settlement with empty hands, without a card or the like, and improves users' convenience.

The self-checkout terminal according to the third embodiment also enables secure member authentication using biometrics authentication. In addition, the self-checkout terminal using face authentication as the biometrics authentication photographs a face image of the user who performs settlement, with a camera. With this structure, the self-checkout terminal using face authentication reduces a burden on users in operation, and is expected to further improve users' convenience.

The self-checkout terminal according to the third embodiment also verifies, by another authentication such as password authentication and fingerprint authentication, whether the user is the specified member, after the user is specified as a member using face authentication. This structure securely verifies that the user is the member specified by face authentication, and thus enables safe settlement processing using the registered member information.

### (Fourth Embodiment)

The following is explanation of a self-checkout terminal according to a fourth embodiment.

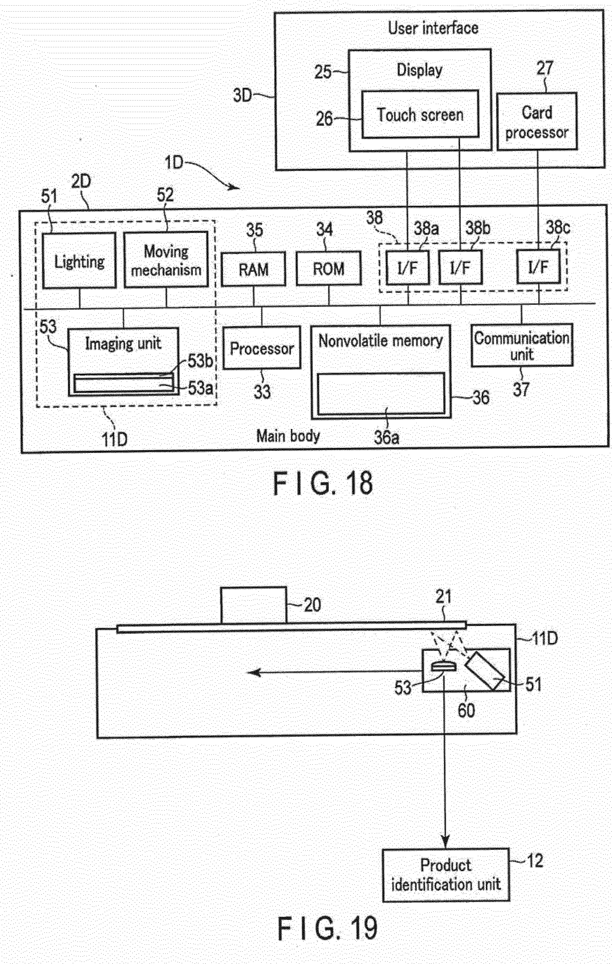

FIG. 18 is a block diagram illustrating a configuration example of a self-checkout terminal 1 D according to the fourth embodiment.

The self-checkout terminal 1 D according to the fourth embodiment is obtained by replacing the image acquisition unit 11A in the self-checkout terminal 1A described in the first embodiment with an image acquisition unit 11 D or 11 D'. The structures other than the image acquisition unit in the self-checkout terminal 1 D can be implemented by structures similar to those of the self-checkout terminal 1A. The image acquisition unit 11 D or 11 D' described in the fourth embodiment may be applied to the image acquisition unit in the self-checkout terminal 1 described in the second or third embodiment, as well as the self-checkout terminal according to the first embodiment.

In the configuration illustrated in FIG. 18, constituent elements that can be implemented with structures similar to those of the self-checkout terminal 1A are denoted by the same reference numerals, and detailed explanation thereof is omitted.

As illustrated in FIG. 18, a main body 2D of the self-checkout terminal 1 D according to the fourth embodiment includes an image acquisition unit 11 D that includes a lighting 51, a moving mechanism 52, and an imaging unit 53.

The lighting 51 emits illumination light to be applied to an imaging range including the whole screen 21. The lighting 51 may be any lighting that emits illumination light that enables the imaging unit 53 to perform imaging. For example, the lighting 51 uses LED light sources that emit near infrared light having a light emission spectrum in a near infrared region. This structure prevents the user from feeling dazzled even when the illumination light is applied to the user via the screen 21.

The moving mechanism 52 is a mechanism to scan the imaging range. The moving mechanism 52 moves a carriage equipped with the lighting 51 and the imaging unit 53, or a carriage equipped with the lighting 51. For example, the imaging unit 53 has a structure of including a linear image sensor for a line in a main scanning direction; the moving mechanism 52 moves the carriage in a sub-scanning direction.

The imaging unit 53 converts the incident light into image information. For example, the imaging unit 53 includes an imaging element 53a formed of photoelectric conversion elements for a line in the main scanning direction. The imaging unit 53 converts light from a scan position moved in the sub-scanning direction by the moving mechanism 52 into image information, to capture an image for the whole imaging range.

The imaging unit 53 also includes a filter 53b to cut out unnecessary light made incident on the imaging element 53a. If the lighting 51 has the structure of emitting near infrared light, the imaging unit 53 includes the filter 53b that cuts out visible light in the light made incident on the imaging element 53a. This structure enables the imaging unit 53 to obtain a bright captured image with reduced noise caused by stray light.

FIG. 19 is a diagram illustrating a first configuration example of the image acquisition unit 11 D in the self-checkout terminal 1 D.

The image acquisition unit 11 D illustrated in FIG. 19 captures an image of the imaging range by moving (scanning) the lighting 51 and the imaging unit 53. The image acquisition unit 11 D includes a carriage 60 equipped with the lighting 51 and the imaging unit 53. When the image acquisition unit 11 D captures an image, the carriage 60 is moved in a one-dimensional direction (sub-scanning direction) by the moving mechanism 52. The position (scan position) to which the lighting 51 applies light is moved in the sub-scanning direction with movement of the carriage 60.

The imaging unit 53 images image information for a line in the main scanning direction in the position to which the lighting 51 applies light. For example, the imaging unit 53 uses a linear image sensor of a CIS (Contact Image Sensor) type for the imaging element 53a. The imaging unit 53 successively captures images of the scan position that is moved in the sub-scanning direction with movement of the carriage 60. Thereby, the imaging unit 53 captures an image of the whole imaging range including the screen 21.

The first configuration illustrated in FIG. 19 reduces the size of the image acquisition unit 11 D, because a reflector to reflect illumination light and the like can be removed from the image acquisition unit 11 D. Consequently, the self-checkout terminal 1 D also reduces the size of the whole main body 2D. In addition, the lighting 51 is disposed in a position close to the scan position. This structure also reduces the quantity of light emitted from the lighting 51, and enables operation with low power consumption.

The lighting 51 may emit near infrared light having a light emission spectrum in a near infrared region. In such a case, the imaging unit 53 includes the filter 53b that cuts out visible light and is provided at a previous stage of the imaging element 53a. The filter 53b transmits near infrared light, and cuts out visible light components such as external light. With the filter 53b, the image acquisition unit 11 D is enabled to adopt illumination light that does not dazzle the user, and obtain a bright captured image with reduced noise caused by stray light.

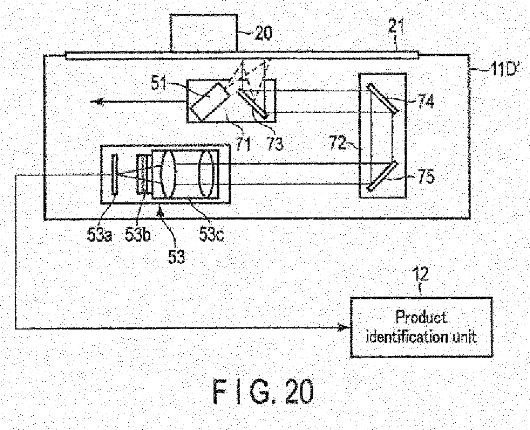

FIG. 20 is a diagram illustrating a second configuration example of the image acquisition unit 11 D' in the self-checkout terminal 1 D.

The image acquisition unit 11 D' in the second configuration example illustrated in FIG. 20 captures an image of the imaging range by scanning the scan position in the sub-scanning direction, like the image acquisition unit 11 D illustrated in FIG. 19. The image acquisition unit 11 D' includes a first carriage 71 and a second carriage 72. The first carriage 71 is equipped with the lighting 51 and a first mirror 73. The second carriage 72 is equipped with a second mirror 74 and a third mirror 75. The first to third mirrors 73 to 75 form an optical system that guides the light from the scan position to the imaging unit 53. The first carriage 71 is moved in the sub-scanning direction by the moving mechanism 52. The second carriage 72 is moved in the same direction as the first carriage at speed 1/2 as fast as the first carriage 71. An optical path is formed by the first to third mirrors 73 to 75 from the scan position to the imaging unit 53, and maintained in a fixed state. The optical system in the image acquisition unit 11 D' forms a reduction optical system.

The imaging unit 53 includes the imaging element 53a, the filter 53b, and a lens group 53c. The imaging element 53a images light that is made incident from the scan position by the optical system as image information for a line in the main scanning direction. The imaging unit 53 includes, for example, a CCD linear image sensor as the imaging element 53a. The lens group 53c causes the light that is guided from the scan position by the first to third mirrors 73 to 75 to be made incident on the imaging element 53a. The filter 53b is a filter that cuts off visible light other than near infrared light applied from the lighting 51. With these structures, the imaging unit 53 illustrated in FIG. 20 is enabled to obtain a bright captured image with reduced noise.

The self-checkout terminal according to the fourth embodiment as described above includes the image acquisition unit including the imaging unit that includes an imaging element formed of a linear image sensor, and a mechanism that scans the scan position in the sub-scanning direction. With this structure, the self-checkout terminal according to the fourth embodiment reduces the size of the image acquisition unit. In addition, the self-checkout terminal according to the fourth embodiment enables disposition of the lighting in a position close to the scan position, and thereby reduces the power consumption of the lighting.

The above embodiments illustrate the case where a memory in the apparatus stores in advance a program executed by the processor. However, the program executed by the processor may be downloaded from a network to the apparatus, or may be installed in the apparatus from a storage medium. The storage medium may be any storage medium that can store a program and is readable by the apparatus, such as a CD-ROM. The functions obtained in advance by installation or download may be implemented in cooperation with the OS (operating system) and the like inside the apparatus.

The embodiments of the present invention described above are presented as examples, and are not aimed at restricting the scope of the invention. These new embodiments may be carried out in other various forms, and various omissions, substitutions, and changes may be made without departing from the gist of the invention. These embodiments and modifications thereof are included in the scope and gist of the invention, and included in the inventions described in the claims and the equivalent range thereof.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the framework of the inventions. The accompanying claims and their equivalents are intended to cover such forms or modifications as would fall within the scope of the inventions.

## Claims

1. A checkout apparatus comprising:
a screen (21) that transmits light;
an imaging unit (18) that captures an image of products through the screen;
a product identification unit (21) configured to identify all products serving as settlement targets from the image captured by the imaging unit, and acquires information to settle a bill for the identified products; and
a settlement processor (13) configured to perform settlement processing on the products identified by the product identification unit.

2. The apparatus according to claim 1, further comprising:
lighting (31) configured to emit near infrared light as illumination light to be applied from one surface side of the screen toward the screen,
wherein the imaging unit includes an image sensor that has a sensitivity characteristic to the near infrared light emitted from the lighting.

3. The apparatus according to claim 2, further comprising:
a filter configured to cut out visible light components and is disposed on an optical path extending between the imaging unit and the products positioned on the other surface side of the screen with the screen interposed therebetween.

4. The apparatus according to claim 2 or 3, wherein the screen is configured to cut out visible light components.

5. The apparatus according to any one of claims 2 to 3, further comprising:
a reflector that is provided on the one surface side of the screen, and diffuses and reflects the illumination light emitted from the lighting toward the screen.

6. The apparatus according to any one of claims 1 to 5, wherein the imaging unit is a camera that includes a two-dimensional image sensor.

7. The apparatus according to any one of claims 1 to 6, wherein
the imaging unit includes a linear image sensor configured to capture an image for a line in a main scanning direction, and further comprising:
a moving mechanism that moves a position where the linear image sensor performs capturing in a sub-scanning direction.

8. The apparatus according to any one of claims 1 to 7, wherein the product identification unit is configured to detect bar codes of the products from the captured image, and identifies the products by decoding the detected bar codes.

9. The apparatus according to any one of claims 1 to 8, wherein the product identification unit extracts image regions of the products from the captured image, and identifies the products based on image features obtained from the image regions of the products.

10. The apparatus according to any one of claims 1 to 9, further comprising:
a biometric information acquisition unit that acquires biometric information of a settler; and
a biometrics authentication unit that performs biometrics authentication using the biometric information acquired by the biometric information acquisition unit and biometric information of members stored in a database,
wherein, if the settler is identified as a specific member by the biometrics authentication performed by the biometrics authentication unit, the settlement processor performs settlement processing using registered information of the member.
